# EUROPÄISCHE PATENTANMELDUNG

(11) **EP 0 791 621 A2**
(43) Veröffentlichungstag der Anmeldung: **27.08.1997**
(21) Anmeldenummer: 97102243.9
(22) Anmeldetag: 13.02.1997
(51) Int. Cl.: C08J 9/00, C08J 9/04

(54) **Polymethacrylimid-Schaumstoff mit Epoxidharz als Flammschutzzusatz**

(30) Priorität: 22.02.1996 DE 19606530
(71) Anmelder: Röhm GmbH, 64293 Darmstadt (DE)
(72) Erfinder: Krieg, Manfred, Dr., 64289 Darmstadt (DE); Geyer, Hans-Jürgen, 64367 Mühltal (DE); Pip, Wolfgang, 64297 Darmstadt (DE)

(57) **Zusammenfassung**

Die Erfindung betrifft ein Verfahren zur Herstellung eines flammgeschützten Polymethacrylimid-Schaumstoffs dadurch gekennzeichnet, daß dem Polymerisationsansatz für den Polymethacrylimid-Schaumstoff ein übliches Flammschutzmittel und 0,1 bis 4 Gew.-% eines Epoxidharzes zugesetzt werden. Die Erfindung betrifft weiterhin Polymethacrylimid-Schaumstoffe mit LOI-Werten von mindestens 25, sowie die Verwendung von Epoxidharz als Flammschutzzusatz für Polymethacrylimid-Schaumstoffe.

## Beschreibung

### Stand der Technik

Polymethacrylimid-Schaumstoffe sind seit langem bekannt (siehe z. B. DE-C 27 26 260). Sie finden wegen ihrer hohen Wärmeformbeständigkeit, ihrer guten Druckfestigkeit und ihres geringen Gewichts eine breite Anwendung z. B. als Kernmaterial für Schichtwerkstoffe oder Schaumstoffverbundkörper (vgl. DE-C 28 22 885, DE-A 33 04 882, US-A 4 316 934). Insbesondere bei der Verwendung im Flugzeugbau werden hohe Anforderungen bezüglich schlechter Entflammbarkeit gestellt.

Zu den Anforderungen gehört insbesondere ein möglichst hoher Wert für die sogenannte untere Grenzsauerstoffkonzentration, die in Form von LOI-Werten (Lowest Oxygen Index) angegeben wird. Je höher der LOI, desto schwerer entflammbar ist das geprüfte Material. LOI-Werte werden nach ATSM Standard D 2863: *Standard Method of Test for Flammability of Plastics Using the Oxygen Index Method* bestimmt. Der LOI-Wert entspricht einer Sauerstoff-Stickstoff-Gasmischung, bei der eine am oberen Ende angezündete Kunststoffprobe gerade noch vollständig abbrennt. Hohe LOI-Werte von z. B. über 23 können bei Polymethacrylimid-Schaumstoffen nur durch den Zusatz von Flammschutzmitteln erreicht werden.

Aus der DE-PS 20 47 096 ist ein flammgeschützter Polymethacrylimid-Schaumstoff bekannt, der durch Erhitzen eines Mischpolymerisats aus Methacrylnitril, Methacrylsäure, Methylmethacrylat und Maleinsäureanhydrid mit einem Gehalt an Ameisensäure als Treibmittel und an Phosphorsäure und Dibrompropylphosphat als flammhemmendem Zusatz hergestellt worden war. Beim Erhitzen auf 150 bis 200 °C cyclisieren die Methacrylnitril- und Methacrylsäureeinheiten zu Methacrylimideinheiten. Aufgrund des Phosphorgehalts von 1,5 bis 3 Gew.-% ist die Wasseraufnahme derartiger Schaumstoffe relativ hoch, zudem tritt durch den Flammschutzzusatz unerwünschterweise eine weichmachende Wirkung ein.

EP-B 146 892 löst dieses Problem durch die Verwendung bzw. Mitverwendung organischer Phosphorverbindungen wie z. B. Dimethylmethanphosphonat (DMMP) oder Alkoxycarbonylmethanphosphonsäurediethylester. Diese Verbindungen werden üblicherweise in den Polymerisationsansätzen für Polymethacrylimid-Schaumstoffe in Mengen von ca. 5 - 15 Gew.-% verwendet. Auf diese Weise können LOI-Werte bis ca. 24 erreicht werden. Da relativ hohe Mengen an Flammschutzmittel immer noch eine gewisse Verschlechterung von Eigenschaften wie z. B. der Druckfestigkeit im Vergleich zu nicht flammgeschützten Schaumstoffen mit sich bringen, ist man bestrebt die Verwendung von z. B. DMMP zumindest zu begrenzen.

Epoxidharze werden durch Kondensation von aromatischen Dihydroxyverbindungen wie z. B. Bisphenol-A oder Bisphenol-F mit Epichlorhydrin (1-Chlor-2,3-epoxypropan) erhalten, die als flüssige Gießharze (Reaktivharze) mit Hilfe von Vernetzern, z.B. mehrfunktionellen Alkoholen oder Aminen, gehärtet werden können. Epoxydharze sind als relativ flammfeste Kunststoffe bekannt (Siehe z. B. M.W.Ranney (1974): Fire Resistant and Flame Retardant Polymers, Noyes Data Corporation, Park Ridge, NewJersey, London, England, S. 123 - 126). Eine flammschützende Wirkung von nicht gehärteten Epoxy-Gießharzen als Zusatz zu Polymethacrylimid-Schaumstoffen ist nicht bekannt.

### Aufgabe und Lösung

Der Erfindung liegt die Aufgabe zugrunde einen verbesserten Flammschutz für Polymethacrylimid-Schaumstoffe bereitzustellen, der es ermöglicht, die Verwendung von herkömmlichen Flammschutzmitteln wie DMMP zu begrenzen und gleichzeitig möglichst hohe LOI-Werte zu erreichen. Die Aufgabe wird gelöst durch ein Verfahren zur Herstellung eines flammgeschützten Polymethacrylimid-Schaumstoffs, dadurch gekennzeichnet, daß dem Polymerisationsansatz für den Polymethacrylimid-Schaumstoff ein übliches Flammschutzmittel und 0,1 bis 4 Gew.-% eines Epoxidharzes zugesetzt werden. Die Erfindung umfaßt weiterhin Polymethacrylimid-Schaumstoffe mit LOI-Werten von mindestens 25. Die Verwendung von Epoxidharzen als Flammschutzzusatz für Polymethacrylimid-Schaumstoffe ist ebenfalls eingeschlossen. Durch das erfindungsgemäße Verfahren können flammgeschützte Polymethacrylimid-Schaumstoffe mit hohen LOI-Werten und guten mechanischen Eigenschaften erhalten werden. Dabei war es völlig unerwartet, daß die Kombination von üblichem Flammschutz und einem Epoxidharz zu einer derartigen Verbesserung der LOI-Werte führen würde.

### Ausführung der Erfindung

### Polymethacrylimid-Schaumstoffe

Polymethacrylimid-Schaumstoffe zeichnen sich durch wiederkehrende Einheiten der Struktur 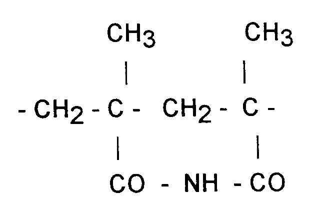 aus, die mehr als 50 Gew.-%, vorzugsweise 60 - 90 Gew.-% der Einheiten des Polymerisats ausmachen. Die Einheiten bilden sich beim Erhitzen auf 150 bis 250 °C aus benachbarten Einheiten der Methacrylsäure und des Methacrylnitrils durch eine cyclisierende Isomerisierungsreaktion (vgl. DE-C 18 17 156, DE-C 27 26 259, EP-B 146 892). Üblicherweise wird zunächst ein Vorprodukt durch Polymerisation der Monomeren in Gegenwart eines Radikalinitiators bei niedrigen Temperaturen, z. B. 30 bis 60 °C mit Nacherhitzung auf 60 bis 120 °C erzeugt, das dann durch Erhitzen auf ca. 180 bis 250 °C durch ein enthaltenes Treibmittel aufgeschäumt wird (siehe EP-B 356 714).

Die zur Herstellung der Schaumstoffe verwendeten Monomerengemische enthalten Methacrylsäure und Methacrylnitril vorzugsweise in einem Molverhältnis zwischen 2 : 3 und 3 : 2 als Hauptbestandteile. Da die Umwandlung der polymerisierten Monomeren in Methacrylimidgruppen während des Erhitzens des Reaktionsansatzes und des Aufschäumens nicht immer vollständig abläuft, enthalten die Polymerisate häufig auch geringe Anteile der ursprünglich eingesetzten Monomereinheiten. Weitere nicht imidartige Einheiten können von zusätzlich mitverwendeten Comonomeren stammen, deren polymerisierte Einheiten schwerer oder gar nicht in cyclische Imidgruppen überführbar sind. Als Comonomere können z. B. Ester der Acryl- oder Methacrylsäure, insbesondere mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid oder Vinylidenchlorid verwendet werden. Der Anteil der Comonomeren soll 30 Gew.-%, vorzugsweise 10 Gew.-% nicht übersteigen.

Als weitere Monomere können in ebenfalls bekannter Weise geringe Mengen an Vernetzern, wie z. B. Allylacrylat, Allylmethacrylat, Ethylenglykoldiacrylat oder -dimethacrylat oder mehrwertige Metallsalze der Acryl- oder Methacrylsäure, wie Magnesium-Methacrylat vorteilhaft verwendet werden. Die Mengenanteile können z. B. 0,05 bis 1 Gew.-% betragen.

Als Polymerisationsinitiatoren werden die an sich für die Polymerisation von Methacrylaten üblichen verwandt, beispielsweise Azoverbindungen, wie Azodiisobutyronitril, sowie Peroxide, wie Dibenzoylperoxid oder Dilauroylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Bevorzugt werden die Polymerisationsinitiatoren in Mengen von 0,01 bis 0,3 Gew.-% bezogen auf die Ausgangsstoffe eingesetzt. Günstig kann es auch sein, Polymerisationsinitiatoren mit unterschiedlichen Zerfallseigenschaften bezüglich Zeit und Temperatur zu kombinieren. Gut geeignet ist z. B. die gleichzeitige Verwendung von tert-Butylperpivalat, tert-Butylperbenzoat und tert-Butylper-2-ethylhexanoat

Zum Aufschäumen des Vorprodukts während der Umwandlung in ein imidgruppenhaltiges Polymer dienen in bekannter Weise Treibmittel, die bei 150 bis 250 °C durch Zersetzung oder Verdampfung eine Gasphase bilden. Treibmittel mit Amidstruktur, wie Harnstoff, Monomethyl- oder N,N'-Dimethylharnstoff, Formamid oder Monomethylformamid, setzen beim Zerfall Ammoniak oder Amine frei, die zur zusätzlichen Bildung von Imidgruppen beitragen können. Es können jedoch auch stickstofffreie Treibmittel wie Ameisensäure, Wasser oder einwertige aliphatische Alkohole mit 3 bis 8 C-Atomen, wie Propanol, Butanol, Isobutanol, Pentanole oder Hexanol, verwendet werden. Treibmittel werden im Reaktionsansatz üblicherweise in Mengen von ca. 0,5 bis 3 Gew.-% bezogen auf die eingesetzten Monomeren verwendet.

Als Metallsalzzusätze, die zugleich rauchmindernd wirken, können gemäß DE-C 27 26 260 dem Gemisch weiterhin Acrylate oder Methacrylate der Alkali- oder Erdalkalimetalle oder des Zinks oder Zirkons oder des Bleis oder andere Verbindungen der genannten Metalle, sofern sie in dem Monomerenansatz löslich sind, zugesetzt werden. Übliche Mengen liegen im Bereich von 0,5 bis 2 Gew.-% bezogen auf sonstige Monomere.

Der Zusatz von elektrisch leitfähigen Partikeln kann gemäß EP-B 356 714 erfolgen, um unerwünschten elektrostatischen Aufladungen vorzubeugen. Hier können Partikel aus Metallen, wie z.B. Aluminium Nickel, Eisenlegierungen, Titan oder Zinn, oder auch Leitruß verwendet werden. Die eingesetzten Mengen können in Bereich von 0,1 bis 10 Gew.-% bezogen auf die eingesetzten Monomeren liegen, üblicherweise werden ca. 1 bis 5 Gew.-% verwendet.

### Flammschutzzusätze

Als übliche Flammschutzzusätze werden bekannte Halogen- oder Phosphorverbindungen verwendet. Bevorzugt sind organische Phosphorverbindungen gemäß der EP-B 146 892, vorzugsweise Dimethylmethanphosphonat (DMMP). Übliche Verwendungsmengen liegen im Bereich von ca. 5 - 15 Gew.-% bezogen auf die eingesetzten Monomeren. Beim Einsatz zunehmender Mengen von z. B. DMMP verschlechtern sich in der Regel die sonstigen thermischen und mechanischen Eigenschaften der Schaumstoffe.

Um Polymethacrylimid-Schaumstoffe mit den üblichen vorteilhaften Eigenschaften und zugleich höheren LOI-Werten zu erreichen, werden erfindungsgemäß die herkömmlichen Flammschutzzusätze durch die Zugabe eines Epoxidharzes ergänzt. Bevorzugt wird dabei DMMP in Mengen von 5 bis 10 Gew.-% zusammen mit 0,1 bis 4 Gew.-%, bevorzugt 0,2 bis 2,5 Gew.-%, besonders bevorzugt 0,4 bis 2,1 Gew.-%, Epoxidharz, jeweils bezogen auf den Gesamtansatz der Monomeren, eingesetzt.

Epoxidharze, auch als Epoxidreaktivharze bezeichnet, enthalten die Kondensationprodukte von aromatischen Dihydroxyverbindungen wie z. B. Bisphenol-A oder Bisphenol-F mit einer Epoxyverbindung z. B. Epichlorhydrin (1-Chlor-2,3-epoxypropan) als Oligomere mit Molekulargewichten von ca. 500 - 2000 Dalton. Gegebenenfalls enthalten sie zugleich einen Vernetzer, z.B. einen mehrfunktionellen Alkohol oder ein mehrfunktionelles Amin. Ein geeignetes Epoxidreaktivharz kann z. B. Bisphenol-A-Epichlorhydrin-Oligomere oder Bisphenol-F-Epichlorhydrin-Oligomere oder eine Kombination der beiden und einen Vernetzer wie z. B. 1,6-Hexandioldiglycidylether enthalten. Ein besonders geeignetes Epoxidreaktivharz enthält ca. 50 Gew.-% Bisphenol-A-Epichlorhydrin-Oligomere, ca. 25 Gew.-% Bisphenol-F-Epichlorhydrin-Oligomere, wobei das Molekulargewicht der Oligomere bei ca. 700 Dalton liegt, sowie ca. 25 Gew.-% 1,6-Hexandioldiglycidylether als Vernetzer. Entsprechende Produkte sind im Handel erhältlich (z. B.unter dem Handelsnamen Rütapox® 0166/S , der Bakelite GmbH, Iserlohn, Deutschland).

### BEISPIEL

### Herstellung von Polymethacrylimid-Schaumstoffen mit verschiedenen Flammschutzzusätzen

Einem homogenen Gemisch aus 50 Gewichtsteilen (T) Methacrylsäure und 50 T Methacrylnitril, 2,5 T Formamid, 1 T H₂O, 0,1 T tert-Butylperpivalat, 0,1 T tert-Butylperbenzoat und 0,034 T tert-Butylper-2-ethylhexanoat und 0,7 T ZnO wurden jeweils verschiedene Mengen an Flammschutzmitteln zugegeben.

Als Flammschutz mittel wurden Dimethylmethanphosphonat (DMMP) und das Epoxidharz Rütapox® 0166/S (50 Gew.-% Bisphenol-A-Epichlorhydrin-Oligomere, ca. 25 Gew.-% Bisphenol-F-Epichlorhydrin-Oligomere mit einem Molekulargewicht der Oligomere von ca. 700 Dalton, ca. 25 Gew.-% 1,6-Hexandioldiglycidylether als Vernetzer; Hersteller Bakelite GmbH, Iserlohn, Deutschland) eingesetzt.

Die Mischungen wurden für 48 h bei 38° C zwischen zwei Glasscheiben mit umlaufender Dichtschnur zu Platten der Größe 500 x 500 x 23 mm polymerisiert. Die Platten wurden anschließend für 3 h bei 115° C getempert. Die erhaltenen Polymerisatplatten wurden dann durch 2 stündiges Erhitzen auf ca. 220° C aufgeschäumt. Von den Schaumstoffplatten wurden die Dichte in kg/m³, die Druckfestigkeit gemäß DIN 53 421, die Wärmeformbeständigkeit gemäß DIN 53 424 und der LOI gemäß ASTM Standard D 2863 bestimmt.

Die Menge der Flammschutzmittel und die ermittelten Werte können der nachstehenden Tabelle entnommen werden

| Ansatz | A | B | C | D | E | F | G |
|---|---|---|---|---|---|---|---|
| DMMP (Gewichtsteile) | 10 | 15 | 10 | 7,5 | 10 | 10 | 0 |
| Rütapox® 0166/S (Gewichtsteile) | 0 | 0 | 0,5 | 0,5 | 1,5 | 2,0 | 1,0 |
| Dichte [kg/m3] | 74,8 | 75,2 | 73,1 | 65,7 | 88 | 143 | 75 |
| Druckfestigkeit [N/mm2] | 1,08 | 0,93 | 1,47 | 1,33 | n.b | n.b. | 1,7 |
| Wärmeformbeständigkeit [°C] | 195 | 204 | 206 | 205 | n.b. | n.b. | 200 |
| LOI | 23 | 24 | 28 | 26 | 27 | 30 | 21 |
| n.b. = nicht bestimmt | | | | | | | |

## Patentansprüche

1. Verfahren zur Herstellung eines flammgeschützten Polymethacrylimid-Schaumstoffs dadurch gekennzeichnet, daß dem Polymerisationsansatz für den Polymethacrylimid-Schaumstoff ein übliches Flammschutzmittel und 0,1 bis 4 Gew.-% eines Epoxidharzes zugesetzt werden.

2. Verfahren nach Anspruch 1, dadurch gekennzeichnet, daß dem Polymerisationsansatz 0,2 bis 2,5 Gew.-% eines Epoxidharzes zugesetzt werden.

3. Verfahren nach Anspruch 2, dadurch gekennzeichnet, daß dem Polymerisationsansatz 0,4 bis 2,1 Gew.-% eines Epoxidharzes zugesetzt werden.

4. Verfahren nach einem oder mehreren der Ansprüche 1 bis 3, dadurch gekennzeichnet, daß als übliches Flammschutzmittel Dimethylmethanphosphonat verwendet wird.

5. Polymethacrylimid-Schaumstoff, dadurch gekennzeichnet, daß er einen LOI-Wert von mindestens 25 aufweist.

6. Polymethacrylimid-Schaumstoff nach Anspruch 5, dadurch gekennzeichnet, daß der LOI-Wert mindestens 26 beträgt.

7. Polymethacrylimid-Schaumstoff hergestellt nach einem der Ansprüche 1 bis 4, dadurch gekennzeichnet, daß er einen LOI-Wert von mindestens 25 aufweist.

8. Die Verwendung von Epoxidharz als Flammschutzzusatz für Polymethacrylimid-Schaumstoffe
